Europäisches Patentamt

European Patent Office

Office européen des brevets

(19)

(11) Numéro de publication: **0 296 933 B1**

(12) **FASCICULE DE BREVET EUROPEEN**

(45) Date de publication du fascicule du brevet: 03.10.90

(51) Int. Cl.⁵: **G01V 1/40, G10K 11/20**

(21) Numéro de dépôt: 88401444.0

(22) Date de dépôt: **13.06.88**

(54) Procédé et dispositif pour la prospection sismique d'un milieu, à partir d'ondes induites créées artificiellement dans un puit.

(30) Priorité: **19.06.87 FR 8708599**

(43) Date de publication de la demande:
**28.12.88 Bulletin 88/52**

(45) Mention de la délivrance du brevet:
**03.10.90 Bulletin 90/40**

(84) Etats contractants désignés:
**AT BE CH DE ES GB IT LI NL SE**

(56) Documents cités:
**FR-A- 1 349 049**
**FR-A- 2 040 577**
**FR-A- 2 534 696**
**US-A- 3 054 471**
**US-A- 4 611 685**

(73) Titulaire: **SOCIETE NATIONALE ELF AQUITAINE (PRODUCTION), Tour Elf 2, Place de la Coupole La Défense 6, F-92400 Courbevoie(FR)**

(72) Inventeur: **Arens, Georges, 6, Allée Alfred Sisley, F-78290 Croissy sur Seine(FR)**
Inventeur: **Delvaux, Jacques, 35, rue de Méon, F-64000 Pau(FR)**
Inventeur: **Gros, Pierre, 9, avenue Jules Massenet, F-78530 Buc(FR)**

(74) Mandataire: **Levy, David et al, c/o S.A. Fedit-Loriot 38, avenue Hoche, F-75008 Paris(FR)**

ACTORUM AG

## Description

La présente invention concerne un procédé et un dispositif pour créer artificiellement des ondes induites dans un puits foré et, plus particulièrement, dans un puits de forage dans lequel est présent un fluide quelconque tel qu'une boue de forage.

Lorsqu'on émet une onde primaire, à partir d'un émetteur situé à la surface ou à l'intérieur d'un puits de forage rempli de fluide, il se produit ce qu'il est convenu d'appeler des ondes de volume telles que des ondes de compression et de cisaillement qui se propagent dans le milieu entourant ledit puits, et des ondes de surface telles que des ondes de tube qui se propagent le long de la paroi dudit puits.

Les ondes de compression et de cisaillement arrivant les premières sur des moyens de réception disposés à une certaine distance fixe de l'émetteur, on s'est, jusqu'à un passé récent, intéressé à ces seules ondes pour déterminer les caractéristiques lithologiques par exemple, du milieu traversé par le puits et dans lequel se sont propagées lesdites ondes de volume. L'enregistrement sous forme de signaux des ondes reçues sur les récepteurs permet notamment de réaliser ce qu'on appelle un profil sismique vertical.

La diagraphie acoustique, contrairement à la sismique de surface, permet de mieux connaître les caractéristiques physiques du milieu proche et entourant le puits de forage grâce notamment à la prise en considération, dans des conditions favorables, des ondes autres que celles de compression,telles que des ondes de cisaillement et/ou des ondes de surface. Parmi les procédés et dispositifs de diagraphie acoustique ayant permis d'améliorer considérablement la prise en compte de toutes les ondes se propageant dans le milieu entourant le puits de forage, on peut citer celui connu sous la dénomination "EVA" d'ELF AQUITAINE.

En effet, en présence de couches pour lesquelles la vitesse de propagation des ondes de volume est élevée, il est possible d'enregistrer les ondes de cisaillement avant l'arrivée des ondes de surface. Lorsque ladite vitesse de propagation est faible, les ondes de surface arrivent avant ou en même temps que celles de cisaillement et occultent pratiquement ces dernières qui ne sont plus ou très peu exploitables.

Dans tous les cas, on s'intéresse en premier lieu aux ondes de volume qui sont les mieux connues pour avoir été les premières observées et analysées.

Dans certains cas, les ondes de tube qui sont les plus souvent négligées au profit des autres ondes mieux connues transportent des énergies qui peuvent être très importantes. Lorsqu'on utilise une source d'émission primaire qui est non couplée c'est-à-dire suspendue librement à un câble de traction, et qui est à large bande, comme par exemple un sparker, les ondes de tube peuvent représenter jusqu'à 95 % de l'énergie rayonnée par ladite source primaire, le reste de l'énergie, soit 5 % environ, donnent naissance aux ondes de volume.

Or, lorsque le puits traverse deux couches géologiques de nature différente, il se produit une rupture d'impédance à la séparation ou interface entre lesdites couches géoligiques. Les ondes de tube arrivant sur ledit interface donnent naissance à une émission secondaire dont l'énergie rayonnée peut être de l'ordre de grandeur de celle de l'émission primaire.

Un tel phénomène a été rarement illustré de façon nette pour la raison que les géophysiciens tentent d'éviter au maximum d'émettre puis d'enregistrer les ondes de tube, mais surtout parce que les meilleurs conditions d'observation d'une telle émission secondaire n'étaient jamais remplies.

La présente invention a pour objet de proposer l'utilisation des ondes de tube pour créer des ondes de volume, de manière à améliorer la connaissance des caractéristiques du milieu traversé par le puits de forage.

A cet effet, la présente invention se propose de mettre en oeuvre une sismique de puits, en créant artificiellement une émission secondaire dans un puits même si dans une zone du puits considéré, il n'y a pas d'interface ou de rupture d'impédance naturelle.

Le procédé selon l'invention est caractérisé en ce qu'il consiste à :
- générer, à partir d'une source d'émission primaire, au moins une onde de tube primaire se propageant le long des parois dudit puits,
- à disposer dans le puits au moins un élément réflecteur pour ladite onde de tube,
- à enregistrer les instants d'émission des ondes induites qui sont rayonnées par ledit élément réflecteur,
- à recevoir sur des moyens récepteurs au moins une partie des ondes induites,
- à enregistrer, sous forme de signaux, les ondes reçues sur les récepteurs,
- puis à traiter lesdits signaux pour déterminer les caractéristiques du milieu à explorer.

Un dispositif de mise en oeuvre du procédé est caractérisé en ce que la source d'émission primaire et l'élément réflecteur sont disposés dans le puits, les moyens récepteurs étant disposés dans un autre puits.

Un avantage de la présente invention réside dans le fait qu'on peut utiliser l'émission secondaire dûe aux ondes de tube à n'importe quel endroit dans un puits et déterminer, après traitement des signaux enregistrés, les caractéristiques physiques du milieu séparant l'élément réflecteur des moyens récepteurs, que le milieu soit homogène ou hétérogène.

D'autres caractéristiques qui sont données dans les autres revendications, et avantages apparaîtront à la lecture de la description d'un procédé et d'un dispositif de mise en oeuvre dudit procédé, donnés à titre indicatif mais non limitatif de plusieurs modes préférés de l'invention, ainsi que du dessin annexé sur lequel :

La figure 1 est une représentation schématique d'un premier mode de production et d'utilisation des ondes induites et des indicatrices des signaux correspondants enregistrés.

La figure 2 est une autre représentation schématique d'un deuxième mode de production et d'utilisation des ondes induites et des indicatrices des signaux correspondants enregistrés.

La figure 3 est une représentation schématique combinant les deux modes représentés sur les figures 1 et 2.

La figure 4 est une collection de traces sismiques obtenues suivant le mode combiné de la figure 3.

La figure 5 est une vue en perspective des moyens d'émission secondaire.

La figure 6 est une vue en coupe simplifiée des moyens d'émission secondaire suspendus aux moyens de déplacement suivant un mode de réalisation de l'invention.

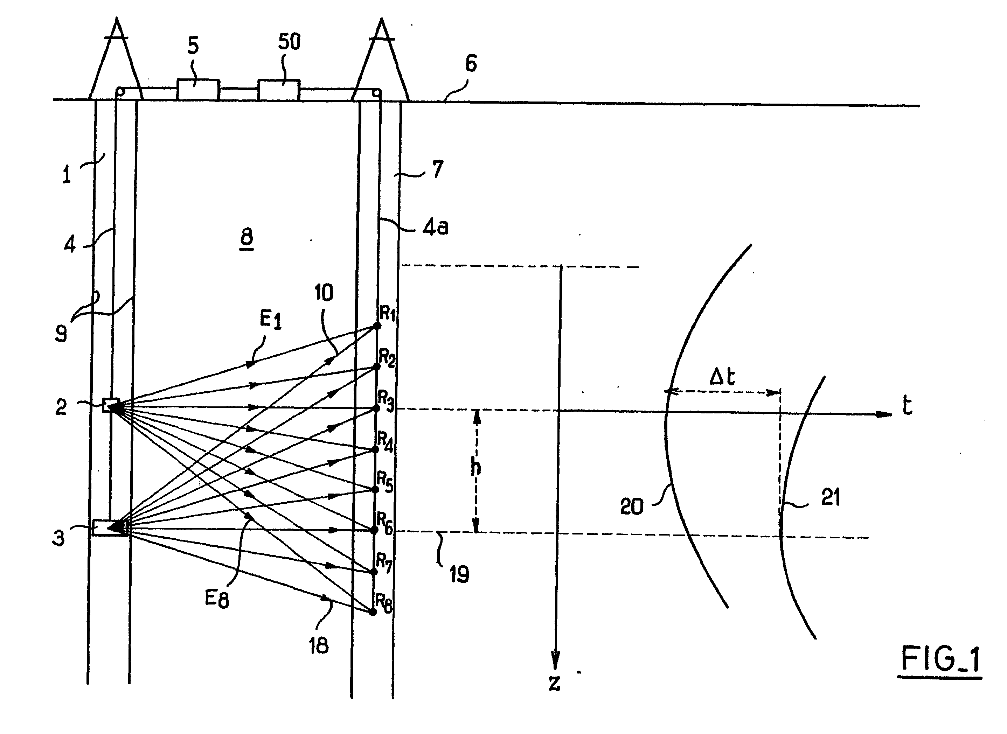

On se reporte à la figure 1. Dans un puits de forage 1 sont descendus puis immobilisés à la profondeur déterminée, une source d'émission primaire 2 qui, de préférence, est non couplée et à large bande comme par exemple un sparker, et un élément réflecteur susceptible de générer une émission secondaire et qui sera désigné dans son ensemble par le terme de source secondaire 3. Les moyens de déplacement et d'immobilisation dans le puits ne sont pas décrits dans le détail et sont simplement matérialisés par un câble de traction 4 commandé par des moyens de commande 5 disposés à la surface du sol 6.

Dans un autre puits 7, distinct et situé à une certaine distance du puits 1, est descendue une série de récepteurs, par exemple huit dans l'exemple représenté sur la figure 1 et référencés $R_1$ et $R_8$ qui sont généralement équidistants entre eux et susceptibles d'être déplacés dans le puits 7 au moyen d'un câble de traction 4 commandé par les mêmes moyens de commande 5 ou des moyens différents.

Lorsque la source primaire 2 est excitée, de l'énergie est rayonnée dans toutes les directions sous forme d'ondes de volume et de surface. Certaines de ces ondes de volume se propagent à travers le milieu 8 compris entre les puits 1 et 7 et sont matérialisées sur la figure 1 par des trajets $E_1$ à $E_8$, dont seuls le premier $E_1$ et le dernier $E_8$ sont référencés, lesdites ondes étant détectées et enregistrées sous forme de signaux électriques par chacun des récepteurs $R_1$ à $R_8$.

La majeure partie de l'énergie rayonnée par la source primaire 2 se propage sous la forme d'onde de tube le long de la paroi 9 du puits 1. L'onde de tube est interceptée par la source secondaire 3 qui donne naissance à une émission secondaire sous forme d'ondes induites matérialisées par les trajets 10 à 18, et qui sont détectées puis enregistrées par les mêmes récepteurs $R_1$ à $R_8$. Pour des raisons de clarté, seuls les trajets 10 et 18 sont indiqués sur la figure 1. En fait, tout se passe comme si au droit de la source secondaire 3, il y avait un réflecteur ou interface dans le milieu 8 matérialisé sur la figure 1 par un trait en pointillé 19 et séparant deux couches géologiques fictives.

Les ondes induites qui sont rayonnées par la source secondaire 3 sont des ondes de volume telles qu'ondes de compression et de cisaillement détectées par les récepteurs $R_1$ à $R_8$, ainsi que des ondes de tube se propageant le long des parois du puits 1.

Les signaux enregistrés sur les récepteurs $R_1$ à $R_8$ à chaque émission de la source primaire 2 sont traités dans des moyens de traitement 50 pour donner des indicatrices de forme hyperbolique représentées sur la droite de la figure 1. Les indicatrices 20 et 21 permettent de déterminer les temps t des arrivées premières en fonction de la profondeur Z.

L'indicatrice 20 est centrée sur la source primaire 2 alors que l'indicatrice 21 est centrée sur la source secondaire 3, l'écart de temps t entre les émissions primaires et secondaires étant égal à $h/V_t$ où h est la distance verticale séparant la source primaire 2 de la source secondaire 3 et $V_t$ la vitesse de l'onde de tube dans le puits 1.

En déplaçant simultanément ou séparément les sources primaire 2 et secondaire 3, on obtient plusieurs familles d'indicatrices analogues à celles indiquées ci-dessus et à partir desquelles peuvent être déterminées les caractéristiques physiques des couches géologiques traversées par les puits 1 et 7.

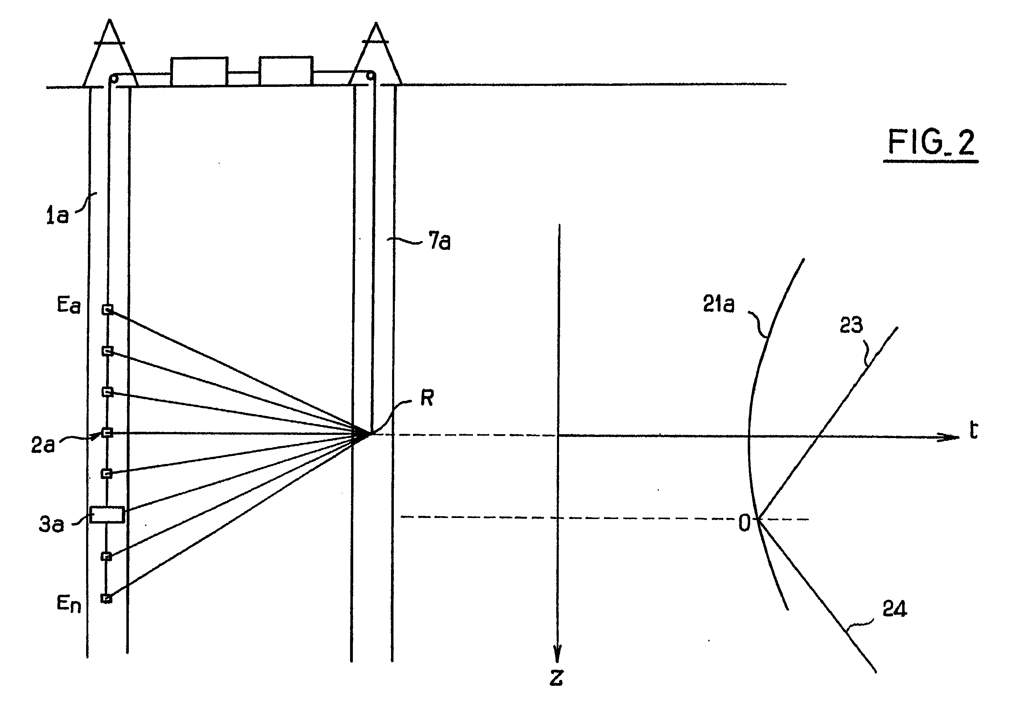

Dans le mode d'émission représenté sur la figure 2, on utilise un récepteur R fixe et disposé dans le puits 7a, une source secondaire fixe 3a dans le puits 1a, la source primaire d'émission 2a étant déplacée dans le puits 1a à des intervalles réguliers et occupant successivement les positions prédéterminées Ea à Eh.

Tout se passe au niveau des trajets représentés sur la figure 2 comme si l'émission était en R et la réception aux différentes positions Ea à Eh. L'indicatrice 21a liée aux arrivées premières a donc une forme hyperbolique conventionnelle et elle est centrée au point R.

Les émissions induites dûes à la source secondaire 3a se matérialisent dans ce cas sur le regroupement de traces sismiques par deux demi-droites 23 et 24. En effet, d'une part, le positionnement relatif des moyens d'émission secondaire et de réception étant fixe à l'émission comme à la réception, le trajet source secondaire-récepteur R étant invariant et commun à l'ensemble des émissions primaires, et d'autre part, l'écart de temps entre l'émission primaire et l'émission induite variant de façon linéaire avec la distance h séparant la source primaire mobile 2a de la source secondaire fixe 3a, au rythme des déplacements de ladite source primaire 2a, la demi-droite 23 représente les arrivées des ondes induites pour le milieu situé au-dessus de la source induite 3a tandis que la demi-droite 24 représente les arrivées des ondes induites pour le milieu situé au-dessous de ladite source secondaire 3a. Les demi-droites 23 et 24 interceptent l'indicatrice 21a au point O pour lequel les deux arrivées sont synchrones, c'est-à-dire lorsque la source primaire 2a est confondue avec la source secondaire 3a. La pente des demi-droites 23 et 24 dépend de la vitesse de l'onde de tube générée par la source primaire 2a.

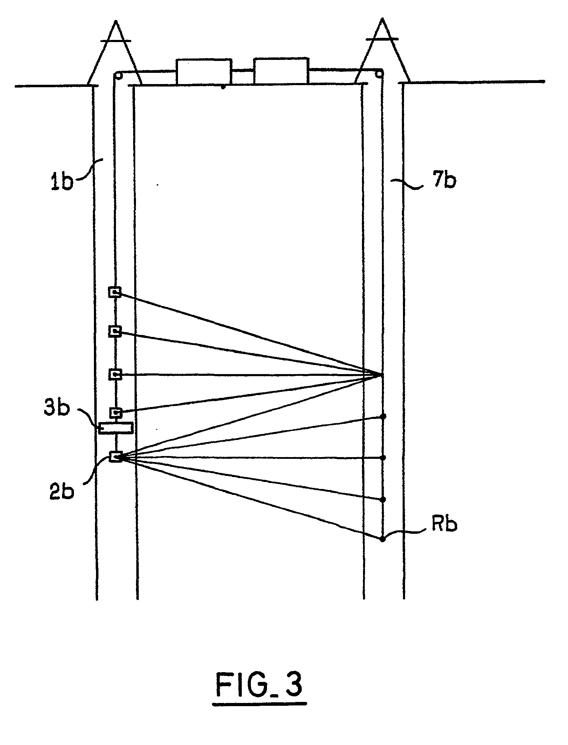

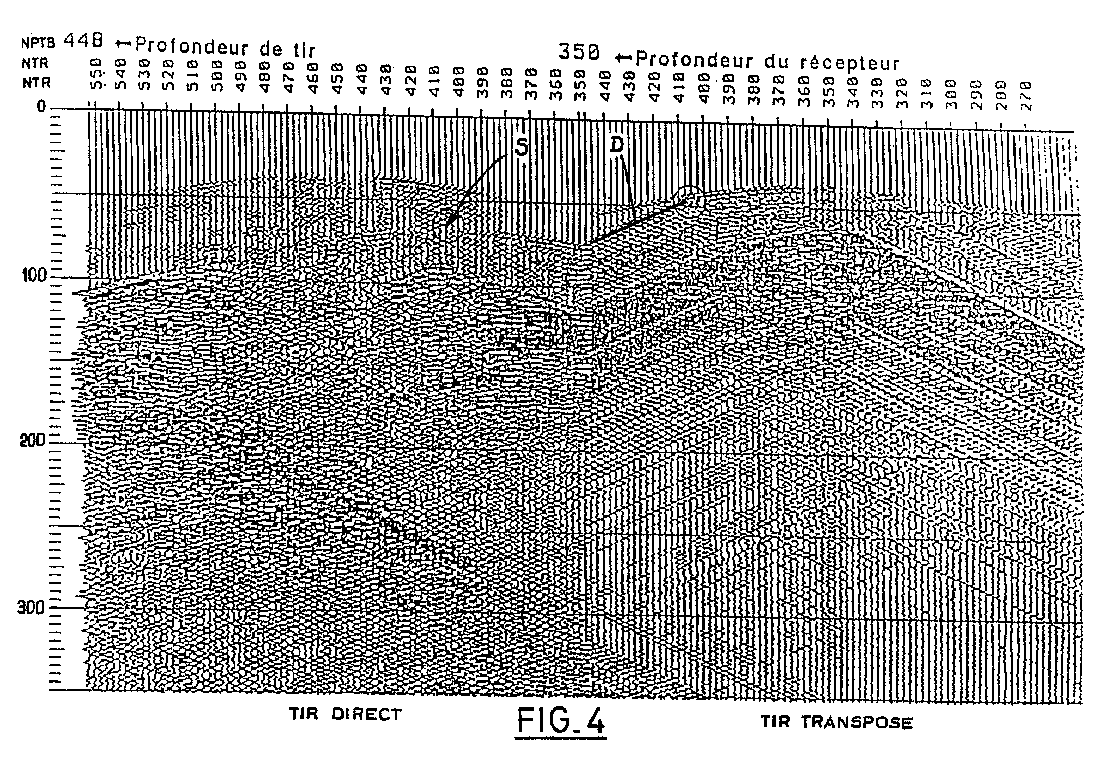

Les figures 3 et 4 représentent un mode combiné des figures 1 et 2 réalisées dans les conditions suivantes.

Dans une première phase, on place la source primaire 2b à 448 m de profondeur dans le puits 1b et la source secondaire 3b à une profondeur de 405 m dans le même puits 1b. L'émission primaire est répétée 80 fois à la même place. Les enregistrements des ondes primaires générées par la source primaire et des ondes induites générées par la source secondaire sont réalisés à l'aide de récepteurs mobiles Rb, déplacés tous les 2,5 m dans le puits 7b, entre 550 m et 350 m. De tels enregistrements ou regroupements de traces sont représentés en partie sur la moitié gauche de la figure 4 et dénommée émission directe.

A la suite de cette première acquisition, on réalise une émission transposée dans laquelle la source secondaire 3b est toujours à 405 m dans le puits 1b, le récepteur étant disposé dans le puits 7b à 350 m. La source primaire est déplacée dans le puits 1b 80 fois entre 448 m et 250 m de profondeur. Le regroupement de traces enregistrées est représentée sur la moitié droite de la figure 4.

L'analyse des deux regroupements de traces de la figure 4 fait apparaître qu'elles ont en commun une trace, celle correspondant au positionnement de la source primaire à 448 m avec un récepteur à 350 m. De plus, l'émission secondaire est visible entre 50 et 80 millisecondes, à la jonction de ces deux sections sismiques. Une telle émission secondaire est matérialisée par l'intersection au niveau de la trace commune, vers 75 ms, des indicatrices précédemment décrites, à savoir une indicatrice à caractère hyperbolique (à gauche) dont le sommet S est compris entre 400 et 410 m, et une demi-droite D interceptant l'arrivée première (à droite), l'intersection étant située à environ 405 m. La correspondance entre ces deux regroupements de traces est particulièrement nette car la source secondaire a été placée au centre du dispositif d'acquisition. L'énergie ainsi convertie est importante, équivalente ou même supérieure à celle de l'émission directe enregistrée sur les mêmes traces.

Ainsi, la présente invention permet de provoquer artificiellement une émission secondaire à n'importe quelle profondeur, en plaçant à la demande une rupture d'impédance dans un puits, par exemple une masse métallique présentant un couple vitesse-densité qui soit nettement différencié de celui du fluide circulant dans ledit puits.

Il faut également noter que le rendement de la source secondaure est relativement constant quelle que soit la profondeur, facile à mettre en oeuvre car facilement mobile, nécessitant seulement un câble de traction.

De plus, la source primaire générant l'onde de tube peut maintenant être disposée en surface ou à faible profondeur dans le puits.

Il est à noter qu'un avantage très important de la présente invention réside dans le fait qu'il n'est plus nécessaire de mettre en oeuvre une source primaire en profondeur dans le puits à des endroits prédéterminés.

L'interférence des ondes générées par l'émission directe et l'émission secondaire est d'autant plus faible que la distance surface - source secondaire est grande. En effet, les ondes en provenance de l'émission directe traversent les premières couches du milieu, appelées la WZ, et s'atténuent rapidement, alors que l'émission secondaire est réalisée en profondeur, à proximité de l'objectif.

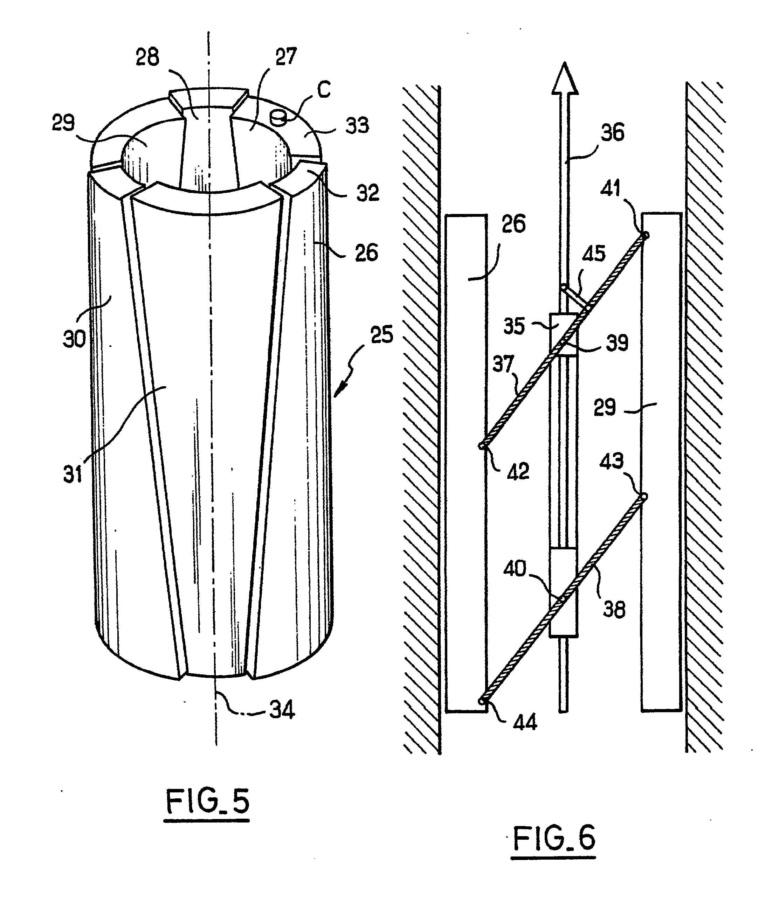

Afin de pouvoir exploiter la sismique ainsi enregistrée, il est nécessaire de disposer d'une origine de temps synchrone de l'émission secondaire. A cet effet, on utilise un capteur C constitué par un hydrophone qui est solidaire de la source secondaire descendue dans le puits. Le capteur C, figure 5, détecte l'arrivée de l'onde de tube primaire et l'instant zéro de l'émission secondaire, les informations ainsi recueillies étant transmises en surface par l'intermédiaire de lignes appropriées, disposées par exemple dans le câble de traction 4.

La source secondaire 3, 3a, ou 3b représentée schématiquement sur les figures 1 à 3, peut être constituée par une masse métallique pleine ou de préférence creuse et dont la paroi externe se trouve à proximité de la paroi du puits dans lequel elle est descendue. En effet, si l'espace annulaire entre les parois en regard de la masse métallique et du puits était grand et rempli de fluide, l'onde de tube produite par la source primaire serait moins perturbée par la source secondaire du fait que le maximum d'amplitude de cette onde se situe sur la paroi, et une grande partie de l'énergie susceptible d'être rayonnée par ladite masse métallique pourrait être perdue. C'est la raison pour laquelle il est préférable de ménager un passage suffisant dans la masse métallique pour le fluide en circulation dans le puits et réduire le plus possible l'espace annulaire.

Un mode de réalisation de la source secondaire est représenté sur les figures 5 et 6.

La source secondaire est un cylindre creux 25 de diamètre variable, figure 5, constitué par six secteurs cylindriques 26 à 31 ayant chacun la forme d'un coin. Les secteurs cylindriques cunéiformes 26 à 31 sont de poids différents et disposés les uns par rapport aux autres de façon qu'aux extrémités le cylindre présente des bases circulaires. Pour cela, on alterne une petite base 32 d'un secteur cunéiforme plus léger 26 avec une grande base 33 du secteur cunéiforme adjacent plus lourd 27, l'axe 34 du cylindre étant de préférence dans l'axe du puits. De cette manière, à chaque petite base d'un secteur 32 est opposée une grande base 33 du secteur en regard.

Une manière de relier les différents secteurs 26 à 31 entre eux et de déplacer le cylindre 25 dans le puits, est représentée sur la figure 6.

Un fourreau 35 est monté coulissant sur une tige de support 36 qui est solidaire du câble de traction. Les deux secteurs cylindriques opposés, par exemples 26 et 29 ou 28 et 31 sont reliés entre eux par deux grandes biellettes 37 et 38 qui sont également articulés à pivotement au moyen d'articulations 39 et 49 sur le fourreau 35. Une extrémité 41 de la biellette 37 est articulée sur la partie supérieure du secteur 29, l'autre extrémité 42 étant articulée sensiblement au milieu du secteur 26 opposé au secteur 29. La biellette 38 est articulée par ses extrémités 43 et 44 respectivement sur le secteur 29 et la partie inférieure du secteur 26. Les deux biellettes 37 et 38 forment avec les secteurs 26 et 29 respectivement un parallélogramme déformable qui est susceptible de déplacer de façon relative les secteurs 26 et 29 de manière à permettre un positionnement et/ou un relevage aisé du cylindre 25. Une petite biellette 45 est également prévue entre la biellette 37 et la tige de support 36. Bien évidemment d'autres paires de biellettes analogues à celles qui viennent d'être décrites sont prévues entre les autres secteurs du cylindre 25. L'ouverture du cylindre 25 à la cote prédéterminée dans le puits est effectuée par gravité grâce à la différence de poids existant entre les secteurs cunéiformes, le cylindre 25 s'ouvrant pour permettre l'application desdits secteurs sur les parois du puits.

En fonction de la distance séparant la source primaire de la source secondaire et dans le cas d'une exploration sismique entre puits, on peut avoir intérêt à renforcer ou à atténuer les ondes de tube multiples. En effet, une partie de chaque onde induite émise par la source secondaire se propage sous forme d'onde de tube induite le long des parois dans lequel est disposée ladite source secondaire. De ce fait, des ondes de tube multiples sont ainsi créées.

Lorsque la distance séparant les sources primaire et secondaire est grande, de l'ordre de 1 500 m, on a intérêt à renforcer les arrivées des ondes de tubes multiples par addition avec leur période de répétition, de manière à éliminer les ondes de volume produites par la source primaire et à renforcer celles produites par la source secondaire. Une façon de réaliser un tel renforcement serait de disposer une autre source secondaire juste au-dessus de la source primaire.

Lorsque la distance entre les sources primaire et secondaire est plus faible, par exemple de l'ordre de 500 m, les ondes de tube multiples conduisent à un mélange des ondes induites de volume produites par la source secondaire. Dans ce cas, on a intérêt à atténuer le plus possible lesdites ondes multiples. Une telle atténuation pourrait être obtenue en disposant en tête de puits des moyens atténuateurs qui absorberaient lesdites ondes de tube multiples ; par example en créant une opposition de phase entre lesdites ondes de tube multiples.

**Revendications**

1) Procédé de prospection sismique d'un milieu, à partir d'ondes induites créées artificiellement dans le puits, consistant à :
- générer, à partir d'une source d'émission primaire, au moins une onde de tube primaire se propageant le long des parois dudit puits,
- à disposer dans le puits un élément réflecteur pour ladite onde de tube,
- à enregistrer les instants d'émission des ondes induites qui sont rayonnées par ledit élément réflecteur,
- à recevoir sur des moyens récepteurs au moins une partie des ondes induites,
- à enregistrer, sous forme de signaux, les ondes reçues sur les récepteurs,
- puis à traiter lesdits signaux pour déterminer les caractéristiques du milieu à explorer.

2) Procédé selon la revendication 1, caractérisé en ce que la source d'émission primaire et les moyens récepteurs sont disposés à la surface du milieu à explorer, l'élément réflecteur étant disposé dans le puits.

3) Procédé selon la revendication 1, caractérisé en ce que la source d'émission primaire et l'élément réflecteur sont disposés dans le puits, les moyens récepteurs étant disposés à la surface du milieu à explorer.

4) Procédé selon la revendication 1, caractérisé en ce que la source d'émission primaire est disposée à la surface du milieu à explorer, l'élément réflecteur étant disposé dans le puits et les moyens récepteurs dans un autre puits.

5) Procédé selon la revendication 1, caractérisé en ce que la source d'émission primaire et l'élément réflecteur sont disposés dans le puits, les moyens récepteurs étant disposés dans un autre puits.

6) Procédé selon les revendications 1 et 5, caractérisé en ce qu'il consiste à générer l'onde de tube primaire à des intervalles de temps réguliers, à maintenir l'élément réflecteur dans une position fixe dans le puits, et à déplacer les moyens récepteurs pour qu'à chaque onde primaire émise corresponde une position des moyens de réception.

7) Procédé selon les revendications 1 et 5, caractérisé en ce que les moyens récepteurs sont fixes, l'élément réflecteur étant déplacé dans le puits pour qu'à chaque onde de tube primaire émise corresponde une position dudit élément réflecteur.

8) Procédé selon la revendication 5, caractérisé en ce que l'élément réflecteur et les moyens récepteurs sont fixes, et en ce que la source d'émission primaire est déplacée dans le puits entre deux émissions consécutives.

9) Dispositif pour la mise en oeuvre du procédé selon les revendications 5 à 8, caractérisé en ce qu'il comprend des moyens d'émission (2) d'une onde de tube primaire dans un premier puits (1), un élément réflecteur (3) disposé dans ledit premier puits et constituant une source d'émission d'ondes induites, des moyens récepteurs $R_1$-$R_8$ desdites ondes induites, lesdits moyens récepteurs étant disposés dans un deuxième puits (7) distinct du premier puits, et des moyens d'enregistrement (50) sous forme de signaux desdites ondes secondaires reçues sur lesdits moyens de réception.

10. Dispositif selon la revendication 9, caractérisé en ce qu'il comprend, en outre, des moyens (C) pour enregistrer les instants d'émission desdites ondes induites.

11. Dispositif selon la revendication 9, caractérisé en ce que les moyens d'émission des ondes induites sont constitués par une masse métallique (3).

12. Dispositif selon la revendication 9, caractérisé en ce que les moyens d'émission des ondes induites sont constitués par un cylindre métallique creux (25) suspendu à des moyens de déplacement (36) susceptibles d'être déplacés dans le premier puits (1) pour amener ledit cylindre creux à diverses positions données dans ledit premier puits.

13. Dispositif selon la revendication 12, caractérisé en ce que le cylindre creux (25) présente une paroi externe qui est proche de la paroi du premier puits.

14. Dispositif selon l'une des revendications 12 ou 13, caractérisé en ce que le cylindre creux (25) est constitué par des secteurs de cylindre cunéiformes (26 à 31).

15. Dispositif selon la revendication 14, caractérisé en ce que les secteurs de cylindre cunéiformes sont agencés par paires de façon que dans chaque paire une petite base (32) d'un desdits secteurs soit en regard d'une grande base (33) de l'autre secteur.

16. Dispositif selon la revendication 15, caractérisé en ce que les deux secteurs cylindriques cunéiformes de chaque paire sont articulés aux extrémités d'une biellette (37) qui est montée libre en pivotement sur un fourreau (35) suspendu à une tige de traction (36), lesdits fourreau et tige de traction constituant lesdits moyens de déplacement.

17. Dispositif selon la revendication 16, caractérisé en ce que les secteurs cylindriques cunéiformes de chaque paire sont reliés entre eux par deux biellettes de liaison, (37, 38), une desdites biellettes (37) étant articulée par une petite tige de liaison (45) sur ladite tige de traction (36).

18. Dispositif selon les revendications 10 et 17, caractérisé en ce que les moyens pour enregistrer les instants d'émission des ondes induites sont constitués par un capteur (C) qui est monté sur le fourreau.

19. Dispositif selon la revendication 9, caractérisé en ce que les moyens d'émission de l'onde primaire sont disposés à la surface du premier puits.

20. Dispositif selon la revendication 9, caractérisé en ce que les moyens d'émission de l'onde primaire sont disposés dans le premier puits au-dessus de la source d'émission secondaire.

21. Dispositif selon la revendication 9, caractérisé en ce que les moyens de réception sont constitués par des récepteurs qui sont régulièrement espacés le long d'un organe de support susceptible d'être déplacé dans le deuxième puits.

22. Dispositif selon l'une des revendications 9 à 17, caractérisé en ce que l'élément réflecteur présente un couple vitesse-densité qui est très différent du couple vitesse-densité du fluide présent dans ledit premier puits.

23. Dispositif selon l'une des revendications 14 à 17, caractérisé en ce que la moitié des secteurs cunéiformes (29, 31, 33) est plus lourde que l'autre.

## Patentansprüche

1. Verfahren zur seismischen Erforschung einer Umgebung mittels künstlich erzeugter Wellen, die in einem Bohrloch eingeleitet werden, bestehend aus:
— der Erzeugung mittels einer primären Emissionsquelle zumindest einer primären Zylinderwelle, die sich längs der Wandungen des Bohrlochs ausbreitet,
— der Anbringung eines reflektierenden Elementes für die Zylinderwelle in dem Bohrloch,
— der Registrierung des Emissionszeitpunktes der induzierten Wellen, die von dem reflektierenden Element ausgesendet werden,
— dem Empfang zumindest eines Teils der eingeleiteten Wellen mittels Rezeptormitteln,
— dem Einspeichern der mittels der Rezeptoren empfangenen Wellen entsprechend der Signalform,
— der anschließenden Signalverarbeitung zur Bestimmung von Charakteristika der zu erforschenden Umgebung.

2. Verfahren nach Anspruch 1, dadurch gekennzeichnet, daß die primäre Emissionsquelle und die Rezeptormittel an der Oberfläche der zu erforschenden Umgebung angebracht sind und des reflektierenden Elements in dem Bohrloch.

3. Verfahren nach Anspruch 1, dadurch gekennzeichnet, daß die primäre Emissionsquelle und das Reflektorelement in dem Bohrloch angebracht sind und die Rezeptormittel an der Oberfläche der zu erforschenden Umgebung.

4. Verfahren nach Anspruch 1, dadurch gekennzeichnet, daß die primäre Emissionsquelle an der Oberfläche der zu erforschenden Umgebung angebracht ist, das reflektierende Element in dem Bohrloch und die Rezeptormittel in einem anderen Bohrloch.

5. Verfahren nach Anspruch 1, dadurch gekennzeichnet, daß die primäre Emissionsquelle und das Reflektorelement in dem Bohrloch angebracht sind und die Rezeptormittel in einem anderen Bohrloch.

6. Verfahren nach den Ansprüchen 1 und 5, dadurch gekennzeichnet, daß es aus der Erzeugung von primären Zylinderwellen in regelmäßigen Zeitintervallen besteht, dem Belassen des reflektierenden Elements in einer festen Position in dem Bohrloch, und der Verschiebung der Rezeptormittel, so daß jede ausgesandte Primärwelle einer Position der Rezeptormittel entspricht.

7. Verfahren nach den Ansprüchen 1 und 5, dadurch gekennzeichnet, daß die Rezeptormittel feststehen, wobei das reflektierende Element in dem Bohrloch verschoben wird, so daß jede primäre, ausgesandte Zylinderwelle einer Position des reflektierenden Elements entspricht.

8. Verfahren nach Anspruch 5, dadurch gekennzeichnet, daß das reflektierende Element und die Rezeptormittel feststehen und dadurch, daß die primäre Emissionsquelle zwischen zwei aufeinanderfolgenden Emissionen in dem Bohrloch verschoben wird.

9. Vorrichtung zur Durchführung des Verfahrens nach den Ansprüchen 5 bis 8, dadurch gekennzeichnet, daß sie Mittel zur Emission (2) einer primären Zylinderwelle in einem ersten Bohrloch (1) aufweist, ein in dem ersten Bohrloch angebrachtes und eine Emissionsquelle für induzierte Wellen bildendes reflektierendes Element (3), Rezeptormittel ($R_1$ bis $R_8$) für die induzierten Wellen, wobei die Rezeptormittel in einem von dem ersten Bohrloch verschiedenen zweiten Bohrloch (7) angebracht sind, und Mittel zur Einspeicherung (50) der von den Rezeptormitteln empfangenen Sekundärwellen entsprechend ihrer Signalform.

10. Vorrichtung nach Anspruch 9, dadurch gekennzeichnet, daß sie außerdem Mittel (C) zur Registrierung des Emissionszeitpunktes der induzierten Wellen aufweist.

11. Vorrichtung nach Anspruch 9, dadurch gekennzeichnet, daß die Mittel zur Emission der induzierten Wellen aus einer metallischen Masse (3) gebildet werden.

12. Vorrichtung nach Anspruch 9, dadurch gekennzeichnet, daß die Mittel zur Emission der induzierten Wellen aus einem metallischen Hohlzylinder (25) gebildet werden, die an die Mittel zur Verschiebung (36) angehängt und zur Verschiebung in dem ersten Bohrloch (1) vorgesehen sind, um den hohlen Zylinder an verschiedene, gegebene Positionen in dem ersten Bohrloch zu bringen.

13. Vorrichtung nach Anspruch 12, dadurch gekennzeichnet, daß der Hohlzylinder (25) eine äußere Wand aufweist, die der Wandung des ersten Bohrlochs nahe ist.

14. Vorrichtung nach einem der Ansprüche 12 oder 13, dadurch gekennzeichnet, daß der Hohlzylinder (25) aus den keilförmigen Sektoren der Zylinder (26 bis 31) gebildet ist.

15. Vorrichtung nach Anspruch 14, dadurch gekennzeichnet, daß die keilförmigen Sektoren der Zylinder paarweise angeordnet sind, derartig, daß innerhalb jeden Paares das dünne Ende (32) des einen der Sektoren dem dicken Ende (33) des anderen Sektors gegenüberliegt.

16. Vorrichtung nach Anspruch 15, dadurch gekennzeichnet, daß die zwei zylindrischen, keilförmigen Sektoren eines jeden Paares mit einem Schwingarm (37) gelenkig verbunden sind, der frei schwenkbar an einer an einem Zugstab (36) angehängten Hülse (35) verbunden ist, wobei die Hülse und der Zugstab die Mittel zur Verschiebung bilden.

17. Vorrichtung nach Anspruch 16, dadurch gekennzeichnet, daß die zylindrischen, keilförmigen Sektoren eines jeden Paares untereinander durch zwei Verbindungsschwingarme (37, 38) verbunden sind, wobei einer der Schwingarme (37) mittels eines kleinen Verbindungsstiftes (45) an dem Zugstab (36) gelenkig angebracht ist.

18. Vorrichtung nach den Ansprüchen 10 und 17, dadurch gekennzeichnet, daß die Mittel zur Einspeicherung des Emissionszeitpunktes der induzierten Wellen durch einen Aufnehmer (C) gebildet werden, der an der Hülse befestigt ist.

19. Vorrichtung nach Anspruch 9, dadurch gekennzeichnet, daß die Mittel zur Emission der Primärwelle an der Oberfläche des ersten Bohrlochs angeordnet sind.

20. Vorrichtung nach Anspruch 9, dadurch gekennzeichnet, daß die Mittel zur Emission der Primärwelle in dem ersten Bohrloch unterhalb der sekundären Emissionsquelle angebracht sind.

21. Vorrichtung nach Anspruch 9, dadurch gekennzeichnet, daß die Rezeptormittel durch Rezeptoren gebildet werden, die an einem Trägerbauteil regelmäßig beabstandet sind und zur Verschiebung innerhalb des zweiten Bohrlochs vorgesehen sind.

22. Vorrichtung nach einem der Ansprüche 9 bis 17, dadurch gekennzeichnet, daß das reflektierende Element ein Geschwindigkeits-Dichte-Paar aufweist, das von dem Geschwindigkeits-Dichte-Paar des in dem ersten Bohrloch vorhandenen Fluids sehr verschieden ist.

23. Vorrichtung nach einem der Ansprüche 14 bis 17, dadurch gekennzeichnet, daß die Hälfte der keilförmigen Sektoren (29, 31, 33) schwerer ist als die andere.

**Claims**

1. A process for seismic prospecting of a medium based on induced waves created artificially in the borehole, which consists in:
   - generating, starting from a primary source of emission, at least one primary tube wave which is propagated along the walls of the said bore-hole,
   - placing a reflecting element for the said tube wave within the bore-hole,
   - recording the times of emission of the induced waves which are radiated by the said reflector,
   - receiving by receptors at least part of the induced waves,
   - recording, in the form of signals, the waves received by the receptors,
   - then processing the said signals in order to determine the characteristics of the medium to be explored.

2. The process according to claim 1, wherein the primary source of emission and the receiving devices are positioned on the surface of the medium to be explored, the reflecting element being positioned in the bore-hole.

3. The process according to claim 1, wherein the primary source of emission and the reflecting element are positioned in the bore-hole, the receiving devices being positioned on the surface of the medium to the explored.

4. The process according to claim 1, wherein the primary source of emission is positioned on the surface of the medium to be explored, the reflecting element being positioned in the bore-hole and the receiving devices in another bore-hole.

5. The process according to claim 1, wherein the primary source of emission and the reflecting element are positioned in the bore-hole, the receiving devices being positioned in another bore-hole.

6. The process according to claims 1 and 5, which consists in generating the primary tube wave at regular intervals of time, maintaining the reflecting element in a fixed position in the bore-hole, and displacing the receiving devices so that to each primary wave emitted there corresponds one position of the receiving devices.

7. The process according to claims 1 and 5, wherein the receiving devices are fixed, the reflecting element being displaced in the bore-hole so that to each primary tube wave emitted there corresponds one position of the said reflecting element.

8. The process according to claim 5, wherein the reflecting element and the receiving devices are fixed, and the source of primary emission is displaced within the bore-hole between two consecutive emissions.

9. A device for carrying out the process according to claims 5 to 8, which comprises means of emission (2) of a primary tube wave in a first bore-hole (1), a reflecting element (3) positioned in the said first borehole forming a source of emission of induced waves, with devices $R_1$–$R_8$ for reception of the said induced waves, the said receivers being positioned in a second bore-hole (7) separate from the first bore-hole, and means of recording (50) in the form of signals of the said secondary waves received by the said receiving devices.

10. The device according to claim 9, which additionally comprises means (C) for recording the times of emission of the said induced waves.

11. The device according to claim 9, wherein the means of emission of the said induced waves take the form of a metallic mass (3).

12. The device according to claim 9, wherein the means of emission of the induced wave take the form of a hollow metallic cylinder (25) suspended by means of displacement (36) which can be moved in the first borehole so as to bring the said hollow cylinder to various given positions within the said first bore-hole.

13. The device according to claim 12, wherein the hollow cylinder (25) has an external wall which is close to the wall of the first bore-hole.

14. The device according to claim 12 or claim 13, wherein the hollow cylinder (25) consists of wedge-shaped sectors of the cylinder (26 to 31).

15. The device according to claim 14, wherein the wedge-shaped sectors of the cylinder are arranged in pairs in such a manner that in each pair a small base (32) of one of the said sectors is adjacent to a large base (33) of the other sector.

16. The device according to claim 15, wherein the two wedge-shaped cylindrical sectors of each pair are articulated at the extremities of a connecting rod (37) which is mounted so as to pivot freely on a sleeve (32) suspended on a traction stem (36), the said sleeve and traction stem constituting the said means of displacement.

17. The device according to claim 16, wherein the wedge-shaped cylindrical sectors of each pair are joined to each other by means of two connecting rods (37, 38), one of these rods (37) being articulated by a small link stem (45) onto the said traction stem (36).

18. The device according to claims 10 and 17, wherein the means of recording the times of emission of the induced waves consist of a receiver (C) mounted on the sleeve.

19. The device according to claim 9, wherein the means of emission of the primary wave are positioned at the surface of the first bore-hole.

20. The device according to claim 9, wherein the means of emission of the primary wave are positioned in the first bore-hole above the source of secondary emission.

21. The device according to claim 9, wherein the means of reception consist of receivers spaced regularly along a support beam which can be displaced within the second bore-hole.

22. The device according to any one of claims 9 to 17, wherein the reflecting element differs very much in velocity and density from the velocity and density of the said first bore-hole.

23. The device according to any one of claims 14 to 17, wherein one half of the wedge-shaped sectors (29, 31, 33) is heavier than the other.

FIG_1

FIG. 2

1a

7a

Ea

2a

3a

En

R

21a

23

24

t

0

z

EP 0 296 933 B1

## FIG_3

NPTB 448 ←Profondeur de tir          350 ←Profondeur du récepteur

TIR DIRECT          FIG.4          TIR TRANSPOSE

EP 0 296 933 B1

FIG. 5

FIG. 6